# FASCICULE DE BREVET EUROPEEN

(11) **EP 2 641 563 B1**
(45) Date de publication et mention de la délivrance du brevet: **26.11.2014**
(21) Numéro de dépôt: 13354011.2
(22) Date de dépôt: 19.03.2013
(51) Int. Cl.: A61C 8/00, A61C 13/00

(54) **Armature de bridge dentaire haubané implanto-porté en matériau composite, et procédé de fabrication de l'armature**
Impantat-getragenes gespanntes Gestell für Zahnbrücke aus Verbundmaterial und Herstellungsverfahren des Gestells
Implanted-supported dental bridge frame with tension band wiring, made of composite material, and method for manufacturing the frame

(30) Priorité: 23.03.2012 FR 1200874
(43) Date de publication de la demande: 25.09.2013
(73) Titulaire: Clunet-Coste, Bruno, 38960 Saint-Etienne-de-Crossey (FR); Maneuf, Bernard, 38500 Voiron (FR); Collombin, André, 38500 Voiron (FR); Monette, Raymond, Le Gardeur QC J5Z 3Z4 (CA)
(72) Inventeur: Clunet-Coste, Bruno, 38960 Saint-Etienne-de-Crossey (FR); Maneuf, Bernard, 38500 Voiron (FR); Collombin, André, 38500 Voiron (FR); Monette, Raymond, Le Gardeur QC J5Z 3Z4 (CA)
(74) Mandataire: Hecké, Gérard

(56) Documents cités:
- EP-A2- 0 974 310
- WO-A2-02/30647
- US-A- 6 039 569

## Description

### Domaine technique de l'invention

L'invention est relative à une armature de bridge dentaire implanto porté sous forme d'un squelette tridimmensionnel constitué d'éléments en matériau composite préimprégné photo polymérisable à base de fibres longues et de particules, et destiné à renforcer le corps de bridges en résine dentaire, les dits renforts étant orientés pour résister aux contraintes fonctionnelles.

### Etat de la technique

Les documents US 2 755 552 et WO 02/30647 décrivent des renforts constitués de fibres pour renforcer des prothèses dentaires, des couronnes, et des attelles de contention.

Le document US 2 793 436 se rapporte à un système pour renforcer des prothèses dentaires fixes ou amovibles, avec des fibres parallèles, croisées, ou toute autre texture de tissage, pouvant être incolore, transparente ou opalescente.

Le document FR 2 588 181 divulgue l'usage de fibres en matériaux composites pour renforcer des prothèses dentaires à base de résines totalement ou partiellement polymérisées, fabriquées par des procédés de pultrusion, injection, compression, moulage, ou transfert.

Les prothèses connues fixées sur des dents ou des implants dentaires sont généralement constituées de métal ou bien d'autres matériaux compacts esthétiques tels que de la résine PMMA, ou encore de la céramique, céramique au disilicate de lithium, céramiques sur armatures sur oxydes de zirconium. Il peut s'agir aussi de composites chargés de particules diverses.

Lorsque le matériau compact esthétique possède un comportement fragile, il est connu de le soutenir par une armature plus résistante qui va le soutenir.

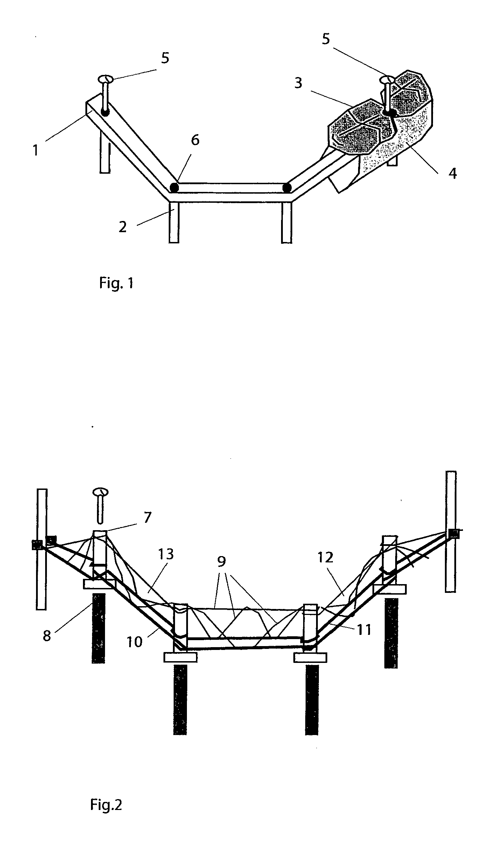

Cette armature de soutien est en général constituée de métal et s'utilise en pratique courante notamment pour confectionner des bridges dentaires, en particulier lorsque ceux ci sont supportés par des implants dentaires. Sur la figure 1 de l'art antérieur, le technicien constitue alors une poutre (1) qui relie les implants (2) et rigidifie la construction. Les dents prothétiques (3) sont solidarisées sur cette poutre (1), laquelle a pour fonction de solidariser les implants entre eux et de soutenir, en l'empêchant de trop fléchir, la résine ou la céramique fragile. La poutre (1) est éventuellement enrobée de résine (4).

D'autres armatures en matériau composite à renforts de fibres sont aussi connues :
Le document US 6 010 337 divulgue une coque de support en matériau composite renforcé aux fibres, ladite coque étant constituée par formage sur un modèle de laboratoire d'une préforme photopolymérisable. La coque de support est rigide, et sa surface pleine ne permet pas d'injecter de la résine.
Le document EP0292026 divulgue un renfort constitué de résine composite et de fibres continues allongées destiné à constituer une poutre pour relier des implants dentaires.

Le document FR2939636 décrit une préforme en matériau composite constituée de résine, de particules et de fibres en l'état d'avant polymérisation, destinée à être formée sur un modèle de laboratoire et à être intégrée dans une plaque base de prothèse dentaire. Elle comporte une grille formée par un quadrillage de fils de trame et de fils de chaîne enrobés dans une résine d'imprégnation, l'espace central entre les mailles étant exempt de fibres et de résine, et déterminant une surface d'espaces libres supérieure à 25 % de la surface totale de la grille. Les fils de trame sont fixés sur les fils de traîne aux noeuds du quadrillage, pour autoriser la manipulation de la préforme et son formage sur un modèle de laboratoire, sans fluage de la résine d'imprégnation dans les espaces des mailles.

Dans le cas de bridges dentaires implanto-portés, l'état de la technique enseigne de solidariser les implants par une poutre, laquelle est vissée par des vis (5, figure 1) sur les émergences (6) des implants, et supporte les dents prothétiques (3). La poutre (1) apporte la rigidité nécessaire pour éviter une flexion trop importante de la résine (4) et sa fracture en fatigue ou par excès de flexion.

Or, cette poutre rigide s'oppose aux déformations physiologiques des pièces osseuses supportant les implants: par exemple, la mandibule, tirée vers l'intérieur sous l'action oblique des muscles élévateurs, se déforme lors de la fonction, jusqu'à 1, 5 mm vers l'intérieur au niveau molaire, à la seule ouverture de la bouche.

D'autre part, la structure osseuse est différente selon les secteurs, conduisant à une mobilité différentielle des segments osseux.

Une telle poutre de renfort connue, en rigidifiant la prothèse, génère des pics de contraintes au système de liaison implant- structure prothétique ou à l'implant lui-même, et cet interface trop fortement sollicité devient le lieu de fractures récurrentes ou de lyse osseuse conduisant à la perte d'ostéointégration de l'implant.

Enfin, la rigidité des prothèses implanto-portées constitue une cause d'inconfort pour le patient.

### Objet de l'invention

Un premier objet de l'invention consiste à réaliser une armature de bridge implanto-porté qui ne rigidifie pas la prothèse, et conserve son caractère viscoélastique à la résine.

L'armature selon l'invention comporte des éléments de renfort de fibres longues préimprégnées de résine photo polymérisable tissées ou en faisceaux, lesdits éléments de renfort étant conformés selon un squelette fibreux tridimensionnel, comprenant un hauban principal et des éléments de renfort de base, tous enroulés autour d'une série de piliers d'implant vissés sur les implants. Les extrémités du hauban principal sont avantageusement inclinées en direction des éléments de renfort de base. Des haubans secondaires sont en plus enroulés autour du hauban principal et des éléments de renfort de base.

Un deuxième objet de l'invention consiste à fournir une armature de bridge implanto-porté constituée d'un squelette tridimensionnel, lequel est rempli avec une résine d'enrobage qui assure la cohésion de l'ensemble et la solidarisation des dents prothétiques.

Un troisième objet de l'invention est de fournir un procédé de montage des éléments constituant l'armature.

Il est caractérisé par les étapes successives suivantes :
- on installe des mâts de tension distalement aux implants les plus distaux,
- on fixe des piliers d'implant sur les implants,
- on enroule après mise en tension un premier élément de renfort autour de la base de chaque pilier d'implant, et on le polymérise,
- on enroule après mise en tension un deuxième élément de renfort autour de la base de chaque pilier d'implant, et on le polymérise,
- on enroule après mise en tension un troisième élément de renfort formant un hauban principal passant par le sommet de chaque pilier d'implant, et on le polymérise,
- on enroule des éléments de renfort additionnelles constituant des haubans secondaires passant autour des éléments de renfort de base et du hauban principal, et on les polymérise,
- et on injecte une résine d'enrobage dans les espaces libres de l'armature fibreuse constituée.

### Description sommaire des dessins

D'autres avantages et caractéristiques ressortiront plus clairement de la description qui va suivre d'un mode de réalisation de l'invention donné à titre d'exemple non limitatif et représenté aux dessins annexés, dans lesquels :
- la figure 1 est une vue schématique en perspective d'un bridge dentaire implanto-porté de l'art antérieur ;
- la figure 2 représente une armature haubanée de bridge dentaire implanto-porté selon l'invention ;
- les figures 3 à 5 montrent les différentes étapes d'un mode de réalisation préférentiel de l'armature de la figure 2.

### Description détaillée de l'invention

En référence à la figure 2, l'armature de bridge est constituée de piliers d'implant 7 destinés à être vissés sur les émergences implantaires 8. Les piliers d'implant 7 supportent des haubans 9 en matériau composite photo polymérisable renforcé avec des fibres longues et continues, tissées ou en faisceaux. Ces haubans 9 retiennent en place des tabliers 10, 11 réalisés également en matériau composite photo polymérisable renforcé avec des fibres longues tissées ou en faisceaux. Les haubans 9 et les tabliers 10, 11 sont indépendants les uns des autres.

Après mise en place des haubans 9 et tabliers 10, 11, des espaces du squelette 12 de l'armature sont vides de fibres et de résine d'imprégnation. Une résine 13 remplit ensuite ces espaces libres du squelette, et solidarise l'ensemble pour constituer une structure armée. Le remplissage des espaces par la résine 13 permet aux éléments résistants du squelette de l'armature de remplir leur rôle de renforcement de l'ensemble ainsi que la solidité de toute la structure.

La réalisation d'une telle armature en matériau composite est une façon nouvelle de confectionner un bridge dentaire implanto-porté, sans avoir recours à une poutre rigide destinée à soutenir la résine constituant le bridge pour l'empêcher de fléchir. La résine d'enrobage du bridge est ainsi armée d'un squelette d'éléments fibrés continus et orientés, qui résiste aux contraintes fonctionnelles, grâce à la présence des haubans 9.

La mise en oeuvre d'un tel bridge haubané est personnalisée dans les laboratoires de prothèses dentaires selon le procédé suivant:

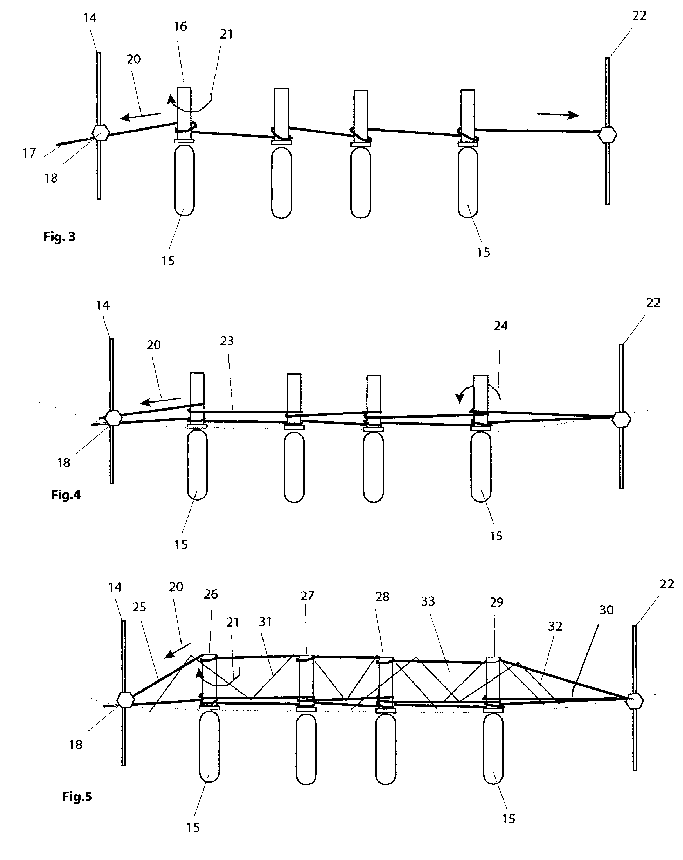

La figure 3 montre la première étape d'un mode de réalisation préférentiel de l'armature. Deux mâts de tension gauche 14 et droit 22 sont installés distalement aux implants 15 les plus distaux. Les implants 15 sont tous munis de piliers d'implant 16 creux destinés à être vissés sur les implants. Ces piliers d'implant 16 sont en titane, mais peuvent être constitués aussi de matériau composite. Ces piliers d'implant sont affectés à la tension des éléments de renfort en matériau composite photo polymérisable renforcés avec des fibres longues tissées ou en faisceaux.

Un premier élément de renfort 17 est arrimé au mât de tension gauche 14 pourvu d'un moyen de rétention 18. Ce moyen de rétention 18 peut être un point de colle composite photo polymérisable ou un dispositif mécanique. Le premier élément de renfort 17 est mis en tension (flèche 20) pour rejoindre le pilier d'implant 16 le plus proche autour duquel il s'enroule dans le sens horaire (flèche 21), et ainsi de suite sur le pilier d'implant 16 suivant, puis le troisième et le quatrième pour finir son trajet sur le mât de tension droit 22.

L'élément de renfort 17 est ensuite photo polymérisé et reste durci dans la position déterminée pour servir de première base vestibulaire au squelette de l'armature.

Dans la figure 4, un deuxième élément de renfort 23 est arrimé au mât de tension gauche 14 pourvu d'un moyen de rétention 18. Il est mis en tension (flèche 20) pour rejoindre le piliers d'implant 16 le plus proche autour duquel il s'enroule dans le sens antihoraire (flèche 24), et ainsi de suite sur le pilier d'implant suivant, puis le troisième et le quatrième pour finir son trajet sur le mât de tension droit 22.

Le deuxième élément de renfort 23 est ensuite photo polymérisé et reste durci dans la position déterminée pour servir de deuxième base linguale ou palatine au squelette de l'armature.

Les deux éléments 17, 23 de base sont séparés d'une distance correspondant à la section du pilier d'implant.

Dans la figure 5, un troisième élément de renfort 25 est fixé à la base du mât de tension gauche 14 pourvu d'un moyen de rétention 18. Ce troisième élément 25 est mis en tension pour rejoindre le sommet 26 du pilier d'implant 16 le plus proche autour duquel il s'enroule dans le sens horaire (flèche 21), et ainsi de suite sur le piliers d'implant suivant 27, puis le troisième 28 et le quatrième 29 pour redescendre sur la base du mât de tension droit 22. C'est ainsi que le troisième élément de renfort 25, distalement aux implants les plus distaux gauche et droit, est incliné d'un angle de 30° à 45° avec les éléments de base.

Le troisième élément de renfort 25 est ensuite photo polymérisé et reste dans la position déterminée pour servir de hauban supérieur principal au squelette de l'armature.

Des éléments de renfort additionnels 31, 32 sont déroulés à partir des bases du squelette avec un trajet englobant le hauban supérieur et les tabliers de base. Ces éléments 31, 32 servent de haubans secondaires et affichent une section inférieure, par exemple 0,80 mm.

Les sens d'enroulement des éléments de renfort peuvent varier en fonction des données anatomiques.

Les haubans secondaires des éléments 31, 32 assurent le soutien complémentaire des éléments de base avec des tirants faisant un angle de 10 à 85° avec les éléments de base.

Ils englobent séquentiellement l'élément de base vestibulaire, le hauban supérieur, l'élément de base lingual ou palatin, et ainsi de suite.

Les espaces vides 33 sont remplis avec une résine, par exemple PPMA, de même nature que la résine d'imprégnation des fibres constituant les éléments de base et les haubans. Le remplissage s'effectue selon les techniques de pressage ou d'injection connues dans les laboratoires de prothèse dentaire, et les dents prothétiques sont incluses dans le processus toujours au moyen de techniques connues.

De manière avantageuse, les mats de tension sont ensuite désolidarisés.

## Revendications

1. Armature de bridge dentaire destiné à être vissé sur des implants dentaires d'un modèle de laboratoire, ladite armature étant en matériau composite à base de fibres, de particules, et remplie de résine par dépôt, pressage ou injection, **caractérisée en ce qu'**elle comporte des éléments de renfort de fibres longues préimprégnées de résine photo polymérisable tissées ou en faisceaux, lesdits éléments de renfort étant conformés selon un squelette fibreux, comprenant un hauban principal (25) et des éléments de renfort de base (17, 23), tous enroulés autour d'une série de piliers d'implant (16) de l'armature de bridge, lesdits piliers d'implant étant destinés à être vissés sur les implants (15),
et **en ce que** les extrémités du hauban principal sont inclinées en direction des éléments de renfort de base.

2. Armature de bridge dentaire selon la revendication 1, **caractérisée en ce que** des haubans secondaires (31, 32) sont enroulés autour du hauban principal (25) et des éléments de renfort de base (17, 23).

3. Armature de bridge dentaire selon la revendication 1 ou 2, **caractérisée en ce que** les éléments de renfort de base (17, 23) et les haubans (9, 25, 31, 32) sont mis en tension à partir de mâts de tension (14, 22) distaux.

4. Armature de bridge dentaire selon la revendication 2 ou 3, **caractérisée en ce que** lesdits haubans font un angle compris entre 15° et 85° avec les éléments de renfort de base (17, 23).

5. Procédé de fabrication dans un laboratoire de prothèse dentaire d'une armature de bridge dentaire selon l'une des revendications 1 à 4, **caractérisé par** les étapes suivantes :
- on installe des mâts de tension (14, 22) distalement aux implants dentaire (15) d'un modèle de laboratoire les plus distaux,
- on fixe des piliers d'implant (16) sur les implants (15),
- on enroule après mise en tension un premier élément de renfort (17) autour de la base de chaque pilier d'implant (16), et on le polymérise,
- on enroule après mise en tension un deuxième élément de renfort (23) autour de la base de chaque pilier d'implant (16) et on le polymérise,
- on enroule après mise en tension un troisième élément de renfort formant un hauban principal passant par le sommet (26, 27, 28, 29) de chaque pilier d'implant (16) et on le polymérise,
- on enroule des éléments de renfort additionnels (31, 32) constituant des haubans secondaires passant autour des éléments de renfort de base (17, 23) et du hauban principal, et on les polymérise,
- on injecte une résine d'enrobage dans les espaces libres de l'armature fibreuse constituée,
- et on désolidarise les mats de tensions (14, 22).

## Patentansprüche

1. Zahnbrückengestell, das dazu bestimmt ist, auf Zahnimplantate eines Labormodells geschraubt zu werden, wobei das Gestell aus Verbundwerkstoff auf der Basis von Fasern, von Partikeln ist und durch Abscheiden, Pressen oder Einspritzen mit Harz gefüllt ist, **dadurch gekennzeichnet, dass** es Verstärkungselemente aus mit photopolymerisierbarem Harz vorimprägnierten langen Fasern, die gewebt oder gebündelt sind, umfasst, wobei die Verstärkungselemente entsprechend einem Fasergerüst gestaltet sind, das einen Hauptverankerungsdraht (25) sowie Grundverstärkungselemente (17, 23) umfasst, die alle um eine Reihe von Implantatpfeilern (16) des Brückengestells gewickelt sind, wobei die Implantatpfeiler dazu bestimmt sind, auf Implantate (15) geschraubt zu werden, und dass die Enden des Hauptverankerungsdrahtes in Richtung der Grundverstärkungselemente geneigt sind.

2. Zahnbrückengestell nach Anspruch 1, **dadurch gekennzeichnet, dass** Nebenverankerungsdrähte (31, 32) um den Hauptverankerungsdraht (25) und die Grundverstärkungselemente (17, 23) gewickelt sind.

3. Zahnbrückengestell nach Anspruch 1 oder 2, **dadurch gekennzeichnet, dass** die Grundverstärkungselemente (17, 23) und die Verankerungsdrähte (9, 25, 31, 32) mittels distaler Spannungsmasten (14, 22) gespannt sind.

4. Zahnbrückengestell nach Anspruch 2 oder 3, **dadurch gekennzeichnet, dass** die Verankerungsdrähte mit den Grundverstärkungselementen (17, 23) einen Winkel zwischen 15° und 85° bilden.

5. Verfahren zur Herstellung eines Zahnbrückengestells nach einem der Ansprüche 1 bis 4 in einem Labor für Zahnprothesen, **gekennzeichnet durch** die folgenden Schritte:
- Spannungsmasten (14, 22) werden distal zu den am weitesten distal gelegenen Zahnimplantaten (15) eines Labormodells angebracht,
- Implantatpfeiler (16) werden an den Implantaten (15) befestigt,
- nach dem Spannen wird ein erstes Verstärkungselement (17) um die Basis eines jeden Implantatpfeilers (16) gewickelt und wird polymerisiert,
- nach dem Spannen wird ein zweites Verstärkungselement (23) um die Basis eines jeden Implantatpfeilers (16) gewickelt und wird polymerisiert,
- nach dem Spannen wird ein drittes Verstärkungselement, das einen Hauptverankerungsdraht bildet, der über den Scheitel (26, 27, 28, 29) eines jeden Implantatpfeilers (16) verläuft, gewickelt und wird polymerisiert,
- zusätzliche Verstärkungselemente (31, 32), die Nebenverankerungsdrähte bilden, welche um die Grundverstärkungselemente (17, 23) und den Hauptverankerungsdraht verlaufen, werden gewickelt und polymerisiert,
- ein Ummantelungsharz wird in die Freiräume des gebildeten Fasergestells gespritzt, und
- die Spannungsmasten (14, 22) werden getrennt.

## Claims

1. A dental bridge armature designed to be screw-fastened onto dental implants of a laboratory model, said armature being made from composite material the base of which is formed by fibres and particles, and filled with resin by deposition, pressing or injection,
**characterized in that** it comprises reinforcing elements formed by long fibres preimpregnated with photo-polymerizable resin which are either woven or in bundles, said reinforcing elements being in the form of a fibrous framework, comprising a main brace (25) and base reinforcing elements (17, 23), all wound around a series of implant abutments (16), designed to be screw-fastened onto the implants (15),
and **in that** the ends of the main brace are inclined in the direction of the base reinforcing elements.

2. The dental bridge armature according to claim 1, **characterized in that** secondary braces (31, 32) are wound around the main brace (25) and the base reinforcing elements (17, 23).

3. The dental bridge armature according to claim 1 or 2, **characterized in that** the base reinforcing elements (17, 23) and braces (9, 25, 31, 32) are tensed from distal tension posts (14, 22).

4. The dental bridge armature according to claim 2 or 3, **characterized in that** said braces form an angle comprised between 15° and 85° with the base reinforcing elements (17, 23).

5. A method for manufacturing in a laboratory of dental prosthesis a dental bridge armature according to one of claims 1 to 4, **characterized by** the following steps:
- tension posts (14, 22) are fitted distally to the most distal dental implants (15) of a laboratory model,
- implant abutments (16) are fixed onto the implants (15),
- a first reinforcing element (17), having first been tensed, is wound around the base of each implant abutment (16) and is polymerized,
- a second reinforcing element (23), having first been tensed, is wound around the base of each implant abutment (16) and is polymerized,
- having first been tensed, a third reinforcing element forming a main brace passing through the apex (26, 27, 28, 29) of each implant abutment (16) is wound and then polymerized,
- additional reinforcing elements (31, 32) forming secondary braces passing around the base reinforcement elements (17, 23) and the main brace, are wound and then polymerized,
- a coating resin is injected into the free spaces of the constituted fibrous armature,
- and the tension posts (14, 22) are released.
